# EUROPÄISCHE PATENTSCHRIFT

(11) **EP 0 531 836 B1**
(45) Veröffentlichungstag und Bekanntmachung des Hinweises auf die Patenterteilung: **03.01.1996**
(21) Anmeldenummer: 92114804.5
(22) Anmeldetag: 29.08.1992
(51) Int. Cl.: B01D 53/14, B01D 53/34, B01D 53/18

(54) **Verfahren zur Reinigung eines Abgases, bestehend aus CO2 + HCl + COCl2**
Method for purifying exhaust gas, containing CO2 + HCl + COCl2
Méthode pour épurer un gaz d'échappement, contenant CO2 + HCl + COCl2

(30) Priorität: 13.09.1991 DE 4130427
(43) Veröffentlichungstag der Anmeldung: 17.03.1993
(73) Patentinhaber: BASF Aktiengesellschaft, D-67063 Ludwigshafen (DE)
(72) Erfinder: Ksoll, Peter, Dr., W-5300 Bonn 1 (DE); Reuther, Wolfgang, Dr., W-6900 Heidelberg (DE); Wittmer, Peter, Dr., W-6730 Neustadt (DE)

(56) Entgegenhaltungen:
- EP-A- 0 216 292
- EP-A- 0 490 199
- GB-A- 2 001 615
- US-A- 4 104 364

## Beschreibung

Die Erfindung betrifft ein kontinuierliches Verfahren zur Reinigung eines Abgases, bestehend aus CO₂ + HCl + COCl₂.

Dieses Abgasgemisch entsteht beispielsweise bei der Herstellung von Carbonsäurechlorid.

Die Herstellung von Carbonsäurechlorid erfolgt nach folgender Reaktionsgleichung 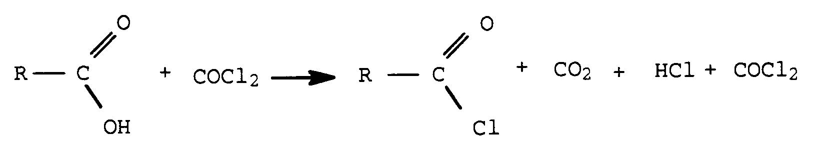
wobei COCl₂ im Überschuß der Reaktion zugeführt wird und N,N-Dialkylformamid als Katalysator verwendet wird.

Das Abgas aus der Reaktion setzt sich also aus CO₂, HCl und nicht umgesetztem COCl₂ zusammen.

Nach dem Stand der Technik wird obiges Abgasgemisch in mit Aktivkohle gefüllten Waschtürmen mit Wasser unter Zusatz von Ammoniak gewaschen. Die daraus resultierende Rückgewinnung bzw. notwendige Entsorgung von HCl ist aufwendig und damit kostenintensiv (EP-A-19160).

Es stellte sich daher die Aufgabe obiges Abgasgemisch auf einfache, kostengünstigere Art zu reinigen, dies bedeutet, Abtrennen der HCl aus dem Abgasgemisch, und gleichzeitig Nutzbarmachen des ansonsten verlorenen COCl₂.

Diese Aufgabe wird erfindungsgemäß dadurch gelöst, daß mittels eines mit N,N-Dialkylformamid x HCl gefüllten Separators, der im wesentlichen aus zwei im oberen und unteren Teil miteinander verbundenen Rohren besteht,
- COCl₂ mit dem N,N-Dialkylformamid zum Vilsmeier-Komplex + CO₂ umgesetzt wird, und
- CO₂/HCl und HCl getrennt aus den beiden Rohren des Separators entfernt werden, wobei man die beiden Rohre so temperiert, daß eine Zirkulation des N,N-Dialkylformamids im Separator erfolgt und daß in dem ersten Rohr, welchem man das Abgas zugibt, HCl an dem N,N-Dialkylformamid x HCl größtenteils adsorbiert wird und in dem zweiten Rohr größtenteils infolge thermischer Spaltung desorbiert wird, wobei man im ersten Rohr ein Gas abführt, welches im wesentlichen CO₂ und einen geringen Anteil von HCl enthält und im zweiten Rohr ein Gas abführt, welches größtenteils von dem desorbierten HCl gebildet wird.

Die Aufgabe wird zudem mittels eines Separators gelöst, dessen erfindungsgemäße Merkmale in Anspruch 2 dargelegt sind.

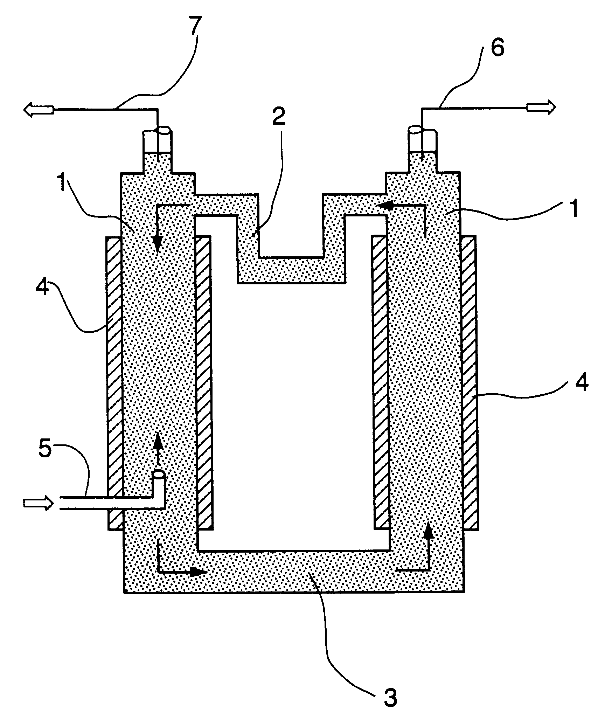

Ein Ausführungsbeispiel der Erfindung mit den wesentlichen erfinderischen Merkmalen ist in der Zeichnung dargestellt und wird im folgenden näher beschrieben. Die Zeichnung veranschaulicht das Prinzip des Verfahrens und den Aufbau des Separators.

Der Separator besteht aus zwei senktrechten Rohren 1, die oben durch ein U-Rohr 2 und unten durch ein gerades Rohr 3 miteinander verbunden sind. Die beiden senkrechten Rohre sind jeweils mit Thermostaten 4 ummantelt, wobei mittels der Thermostaten ein Rohr auf ca. 20°C und das andere Rohr auf ca. 60°C gehalten wird. Der gesamte Separator wird mit N,N-Dialkylformamid - im weiteren als DFM geschrieben - x HCl gefüllt, wobei aufgrund des Temperaturgradienten 20 - 60°C in den beiden senkrechten Rohren eine Zirkulation des DFM x HCl erreicht wird.

In das bei 20°C gekühlte Rohr wird über einen Stutzen 5 das Abgasgemisch in Gegenstrom zu dem im Separator zirkulierenden Mengenstrom eingeleitet. Hierbei wird die HCl von DFM x HCl adsorbiert. Das so entstandene DFM x 2HCl strömt in das auf 60°C erwärmte Rohr und wird dort thermisch in DFM x HCl und HCl gespalten. Die HCl entweicht über den Stutzen 6 und ihr Reinheitsgrad wird FT-IR-spektroskopisch analysiert.

CO₂ geht mit DFM x HCl keine Verbindung ein und entweicht über den Stutzen 7 des auf 20°C gekühlten Rohres. Hierbei wird ein geringer Anteil an HCl mitgerissen. Auch dieser Mengenstrom wird FT-IR-spektroskopisch analysiert.

COCl₂ hingegen reagiert mit DFM x HCl nach folgenden Reaktionsgleichung 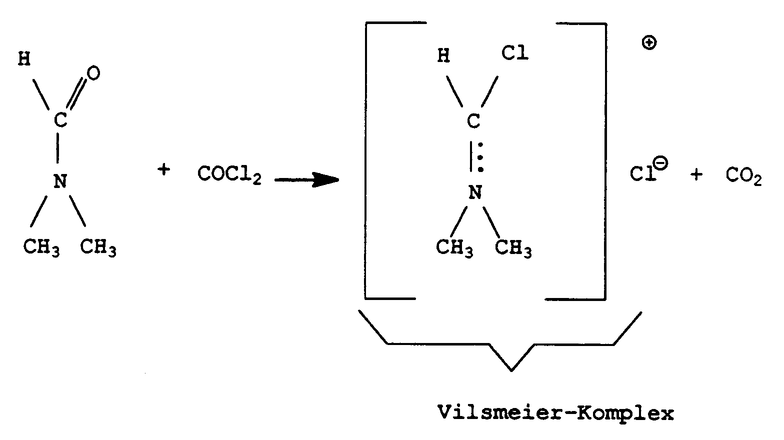
CO₂ entweicht ebenfalls über den Stutzen 7 aus dem Separator, der Vilsmeier-Komplex kann nach einer gewissen Anreicherung im Separator zur Umsetzung von Carbonsäure zu Carbonsäurechlorid genutzt werden.

Gemäß dem Dargelegten zeigt sich, daß mittels des erfindungsgemäßen Separators aus dem Abgasgemisch auf einfache Art HCl abgetrennt und COCl₂ wieder einer Nutzbarmachung zugeführt werden kann.

### Beispiel

Ein - wie oben beschriebener - Separator, Fassungsvermögen 1,2 l, wird mit 8 mol N,N-Diethylformamid - im weiteren als DEF geschrieben - gefüllt. Durch Zudosierung von 8 mol HCl entsteht DEF x HCl. Nach dieser einmaligen Vorbereitung des DEF x HCl und der entsprechenden Temperierung des Separators kann die Reinigung des Abgasgemisches beginnen. Es werden ca. 100 l Abgasgemisch pro Stunde durch den Separator hindurchgeleitet. Aus dem gekühlten Rohr wird CO₂ mit weniger als 10 % des HCl ausgetragen. Der COCl₂-Gehalt in diesem CO₂/HCl-Gemisch liegt unter der Nachweisgrenze von 0,01 %. Die mit dem Abgasgemisch eingebrachte HCl wird zu über 90 % in das auf 60°C erwärmte Rohr transportiert. Die HCl entweicht nach der thermischen Spaltung des DEF x 2HCl mit einer Reinheit von über 99 %.

## Patentansprüche

1. Kontinuierliches Verfahren zur Reinigung eines Abgases, bestehend aus CO₂ + HCl + COCl₂, dadurch gekennzeichnet, daß mittels eines mit N,N-Dialkylformamid x HCl gefülltem Separators, der im wesentlichen aus zwei im oberen und unteren Teil miteinander verbundenen Rohren besteht,
- COCl₂ mit dem N,N-Dialkylformamid zum Vilsmeier-Komplex + CO₂ umgesetzt wird, und
- CO₂/HCl und HCl getrennt aus den beiden Rohren des Separators entfernt werden, wobei man die beiden Rohre so temperiert, daß eine Zirkulation des N,N-Dialkylformamids im Separator erfolgt und daß in dem ersten Rohr, welchem man das Abgas zugibt, HCl an dem N,N-Dialkylformamid x HCl größtenteils adsorbiert wird und in dem zweiten Rohr größtenteils infolge thermischer Spaltung desorbiert wird, wobei man im ersten Rohr ein Gas abbführt, welches im wesentlichen CO₂ und einen geringen Anteil von HCL enthält und im zweiten Rohr ein Gas abführt, welches größtenteils von dem desorbierten HCl gebildet wird.

2. Separator zur Durchführung des Verfahrens nach Anspruch 1, dadurch gekennzeichnet, daß zwei senkrechte Rohre 1 oben über ein nach unten geführtes U-Rohr 2 und unten durch ein gerades Rohr 3 miteinander verbunden sind, die beiden senkrechten Rohre oben jeweils einen Stutzen 6 und 7 aufweisen, und ein senkrechtes Rohr im unteren Teil einen Stutzen 5 aufweist und die beiden senkrechten Rohre mit Thermostaten 4 ummantelt sind.

## Claims

1. A continuous process for purifying an off-gas composed of CO₂ + HCl + COCl₂, which comprises using a separator filled with N,N-dialkylformamide × HCl and consisting essentially of two pipes connected together in the upper and lower part,
- to react COCl₂ with the N,N-dialkylformamide to give the Vilsmeier complex + CO₂, and
- to remove CO₂/HCl and HCl separately from the two pipes of the separator, with temperature control in the two pipes such that circulation of the N,N-dialkylformamide takes place in the separator, and that in the first pipe, into which the off-gas is fed, HCl is for the most part adsorbed onto the N,N-dialkylformamide × HCl, and in the second pipe is for the most part desorbed as a consequence of thermal cleavage, the gas taken off in the first pipe essentially comprising CO₂ and a small proportion of HCl, and the gas taken off in the second pipe being for the most part formed by the desorbed HCl.

2. A separator for carrying out the process as claimed in claim 1, wherein two vertical pipes 1 are connected together at the top via a downward facing U pipe 2 and at the bottom by a straight pipe 3, the two vertical pipes each have a connector 6 and 7 at the top, and one vertical pipe has a connector 5 in the lower part, and the two vertical pipes are jacketed with thermostats 4.

## Revendications

1. Procédé d'épuration en continu d'un gaz résiduaire constitué de CO₂ + HCl + COCl₂, caractérisé en ce qu'au moyen d'un séparateur chargé de N,N-dialkylformamide x Hcl, qui est essentiellement constitué de deux tubes reliés entre eux à leurs parties supérieure et inférieure,
- on transforme le COCl₂ avec le N,N-dialkylformamide en un complexe de Vilsmeier + CO₂ et
- on élimine séparément du CO₂/Hcl et du Hcl des deux tubes du séparateur, où l'on règle les deux tubes de manière à ce qu'une circulation du N,N-dialkylformamide dans le séparateur s'établisse et que dans le premier tube dans lequel les gaz sont introduits, le Hcl soit adsorbé en grande partie sur le N,N-dialkylformamide x Hcl et désorbé en grande partie dans le deuxième tube par dissociation thermique, où l'on évacue du premier tube un gaz qui contient essentiellement du CO₂ et une faible quantité de HCL et où l'on évacue du second tube un gaz en grande partie formé du Hcl désorbé.

2. Séparateur pour la mise en oeuvre du procédé suivant la revendication 1, caractérisé en ce que deux tubes verticaux 1 sont mutuellement reliés par le haut par un tube en U 2 incurvé vers le bas et par le bas par un tube droit 3, les deux tubes verticaux présentent chacun un conduit 6 et 7 et un tube vertical présente à sa partie inférieure un conduit 5 et les deux tubes verticaux sont chemisés d'une enveloppe thermostatique 4.
